# EUROPÄISCHE PATENTSCHRIFT

(11) **EP 3 411 187 B1**
(45) Veröffentlichungstag und Bekanntmachung des Hinweises auf die Patenterteilung: **07.04.2021**
(21) Anmeldenummer: 17702377.7
(22) Anmeldetag: 01.02.2017
(51) Int. Cl.: B25B 7/02

(54) **ZANGE MIT ZWEI ZANGENSCHENKELN**
PLIERS HAVING TWO PLIERS HANDLES
TENAILLE À DEUX BRANCHES

(30) Priorität: 04.02.2016 DE 102016101926
(43) Veröffentlichungstag der Anmeldung: 12.12.2018
(73) Patentinhaber: Knipex-Werk C. Gustav Putsch KG, 42349 Wuppertal (DE)
(72) Erfinder: HEENEN, Matthias, 46242 Bottrop (DE)
(74) Vertreter: Müller, Enno
(86) Internationale Anmeldenummer: PCT/EP2017/052091
(87) Internationale Veröffentlichungsnummer: WO 2017/134069

(56) Entgegenhaltungen:
- DE-B- 1 016 199
- DE-B- 1 086 189
- US-A- 1 346 983
- US-A- 2 523 385

## Beschreibung

### Gebiet der Technik

Die Erfindung betrifft eine Zange nach den Merkmalen des Oberbegriffs des Anspruches 1.

### Stand der Technik

Zangen mit Arbeitsbereichen, die erste und zweite verzahnte Bereiche aufweisen, sind bekannt, so bspw. als sogenannte Kombinationszangen oder Flachzangen. Die aufeinander zu weisenden verzahnten Bereiche des Zangenmaules dienen bspw. zum Ergreifen eines Werkstückes oder auch eines Schraubenkopfes bzw. einer Schraubmutter.

Bekannte Ausbildungen weisen erste und zweite verzahnte Bereiche auf, welche insbesondere in der Zangenmaul-Schließstellung betrachtet gleich geformt und bezüglich ihrer durch die Zahnspitzen aufgespannten Wirkflächen parallel zueinander ausgerichtet sind. Darüber hinaus sind Zangen bekannt, bei welchen einer der verzahnten Bereiche gegenüber dem anderen verzahnten Bereich abweichend geformt ist, insbesondere bezüglich der Ausrichtung und/oder des Verlaufs der die Zahnspitzen verbindenden Hüllflächen.

Bei einer aus der DE 10 16 199 B bekannten Klemmzange ist an einer Zangenbacke ein durchgehender einzelner verzahnter Bereich ausgebildet, in welchem die Zahnspitzen in einer ebenen Hüllfläche enden. An der gegenüberliegenden Zangenbacke ist eine im Hinblick auf die Hüllfläche im Wesentlichen V-förmig verlaufende Verzahnung ausgebildet, wobei in einem ersten V-Schenkel die Zahnspitzen auch in einer ebenen Hüllfläche enden, in dem zweiten V-Schenkel jedoch in einer konvex verlaufenden Hüllfläche. Die konvex verlaufende Hüllfläche läuft an ihrem dem freien Ende der Zangenbacken zugeordneten Endbereich etwa tangential in einen unverzahnten, gerade verlaufenden Abschnitt der Zangenbacke ein.

Im Weiteren ist auch auf den Stand der Technik gemäß der DE 10 86 189 B, US 1 346 983 A und US 2 523 385 A zu verweisen.

Ausgehend von dem aus der DE 10 16 199 B bekannten Stand der Technik beschäftigt sich die Erfindung mit der Aufgabenstellung, eine Zange der genannten Art anzugeben, bei welcher die Ausgestaltung hinsichtlich der ersten und/oder zweiten verzahnten Bereiche vorteilhaft vorgenommen ist.

### Zusammenfassung der Erfindung

Diese Aufgabe ist beim Gegenstand des Anspruches 1 gelöst, wobei darauf abgestellt ist, dass der bezogen auf eine Längserstreckung der Zangenbacken in einem Längsquerschnitt sich bei Berührung der Hüllflächen des ersten und des zweiten gezahnten Bereiches am Weitesten in Richtung auf den gegenüberliegenden Arbeitsbereich vorwölbende Punkt der konvexen Hüllfläche etwa mittig des zweiten gezahnten Bereiches angeordnet ist oder dass in Richtung der freien Enden der Zangenschenkel vorgelagert der ersten und zweiten gezahnten Bereiche dritte und vierte gezahnte Bereiche ausgebildet sind, die von den ersten und zweiten gezahnten Bereichen durch eine sich bei geschlossenem Zangenmaul gegebene Lochstruktur getrennt sind und der dritte oder vierte gezahnte Bereich der Zangenbacke mit seinen Zahnspitzen eine ebenfalls ebene Hüllfläche berührt und dass der sich am weitesten vorwölbende Punkt in einer einem Ende zugewandten Hälfte der Längserstreckung des zweiten gezahnten Bereiches angeordnet ist.

Es ist eine Zange angegeben, mittels welcher unter Nutzung der ersten und zweiten verzahnten Bereiche des Zangenmaules ein sicheres Ergreifen insbesondere blechartiger Werkstücke oder dergleichen ermöglicht ist. Die Zähne beider verzahnten Bereiche verlaufen bezüglich ihrer Zahnspitzen zunächst und im Wesentlichen bevorzugt quergerichtet zu einer Längserstreckung des Arbeitsbereiches insgesamt. Die Zähne und darüber hinaus auch die zwischen den Zähnen sich einstellenden Zahnlücken können weiter, wie auch bevorzugt, bezüglich ihrer Längsquerschnittgestaltung über den gesamten verzahnten Bereich gleich gestaltet sein. Dies trifft in bevorzugter Ausgestaltung auch auf die Zähne und Zahnlücken des gegenüberliegenden verzahnten Bereiches unter Berücksichtigung der insgesamt konvexen Anordnung der Zähne zu. Hierdurch ist in bevorzugter Ausgestaltung ermöglicht, dass die Zahnspitzen des einen verzahnten Bereiches in der Zangenmaul-Schließstellung in Zahnlücken des anderen verzahnten Bereiches eintauchen können.

Durch die ebene Gestaltung der die Zahnspitzen des ersten verzahnten Bereiches berührenden Hüllfläche ist bei Ergreifen eines bspw. blechförmigen Werkstückes mit einer zugewandten ebenen Oberfläche die Anlage aller Zahnspitzen des ersten verzahnten Bereiches an der Werkstückoberfläche erreichbar. Die dieser Fläche gegenüberliegende Fläche des Werkstückes wird erfasst durch einen oder mehrere Zahnspitzen des zweiten verzahnten Bereiches, dies insbesondere bedingt durch die Anordnung der Zahnspitzen entlang der konvexen Hüllfläche. Bei Werkstücken, bspw. Blechen mit einer senkrecht zur Längserstreckung der Arbeitsbereiche betrachteten Dicke, die angepasst an die Zangenmaulgestaltung gewählt ist (bspw. bis hin zu 10 mm), ergibt sich in einem Längsquerschnitt von dem Berührungspunkt der konvexen Hüllfläche des zweiten verzahnten Bereiches an der zugeordneten Oberfläche des Werkstückes eine senkrechte, in Richtung auf den ersten verzahnten Bereich wirkende Kraftkomponente, die auf die durch die in Längserstreckung jeweils äußeren Zahnspitzen begrenzte ebene Hüllfläche trifft. Es ergibt sich zumindest bis hin zu einer vorgegebenen Werkstoffdicke entsprechend kein Kippmoment auf das Werkstück. Vielmehr ist ein sicheres, kippfreies Ergreifen des Werkstückes durch die beschriebene Ausgestaltung der ersten und zweiten verzahnten Bereiche ermöglicht.

Die Hüllflächen (ebene und konvexe) können, wie weiter bevorzugt, in der Zangenschließstellung bzw. Zangenmaul-Schließstellung sich durchdringen, dies zufolge des zumindest partiellen Ineinandergreifens der Zähne.

Zudem kann sich, wie auch bevorzugt, eine Hüllfläche, weiter bevorzugt beide Hüllflächen, quer zur Längserstreckung der Zangenschenkel bzw. der Arbeitsbereiche in einem diesbezüglichen Querschnitt eben erstrecken, so dass bezüglich der im Längsquerschnitt konvexen Hüllfläche sich diese im Wesentlichen als Ausschnitt einer dreidimensionalen Kreiszylinderfläche darstellt.

Die Verzahnung sowohl des ersten als auch des zweiten verzahnten Bereiches weist einen dem freien Ende des Arbeitsbereiches bzw. des Zangenschenkels zugewandten Beginn und ein dem Gelenkbereich zugewandtes Ende auf.

Die in einem Längsquerschnitt - bezogen auf eine Längserstreckung der Zangenbacke - sich bei Berührung der konvexen und ebenen Hüllflächen quer zur Längserstreckung des Zangenschenkels ergebende Berührungslinie ist bevorzugt in einem Bereich gegeben, der vom Beginn der Verzahnung aus betrachtet zu diesem Beginn in Richtung auf das Ende der Verzahnung hin beabstandet ist. Der diesbezügliche Abstand kann einem Zehntel bis hin zu einem Halben, weiter beispielsweise einem Viertel oder einem Drittel des Erstreckungsmaßes der Verzahnung zwischen dem Beginn und dem Ende desselben betragen.

Der - bezogen auf eine Längserstreckung der Zangenbacke - in einem Längsquerschnitt sich bei Berührung der Hüllflächen des ersten und des zweiten gezahnten Bereiches am weitesten in Richtung auf den gegenüberliegenden Arbeitsbereich vorwölbende Punkt der konvexen Hüllfläche ist etwa mittig des zweiten gezahnten Bereiches angeordnet. Hieraus kann sich weiter eine Ausgestaltung ergeben, bei welcher eine in ein zu ergreifendes Werkstück über den zweiten konvex geformten verzahnten Bereich eingeleitete Kraftkomponente unter Berücksichtigung einer maximal zulässigen Dicke des zu erfassenden Werkstückes auf einen sich ausgehend vom Beginn der Verzahnung des ersten verzahnten ebenen Bereiches bis hin etwa zu drei Viertel dessen Längserstreckung trifft. Der bei Berührung der Hüllflächen in Richtung auf den gegenüberliegenden Arbeitsbereich am weitesten sich vorwölbende Punkt der konvexen Hüllfläche muss mit Bezug auf einen Längsquerschnitt nicht zwingend der Berührungspunkt der Hüllflächen sein.

In Richtung der freien Enden der Zangenschenkel sind vorgelagert den ersten und zweiten gezahnten Bereichen dritte und vierte gezahnte Bereiche ausgebildet, die von den ersten und zweiten gezahnten Bereiche durch eine sich bei geschlossenem Zangenmaul gegebene Lochstruktur getrennt sind. Diese gegebene Lochstruktur kann bspw. ein Stift-Greifloch sein, bspw. zur Erfassung drahtartiger Werkstücke ab einem Durchmesser von 1,5 mm.

Es ergeben sich so in Längserstreckung der Zangenbacken getrennt durch die Lochstruktur zwei hintereinander angeordnete Greifzonen, von welchen eine die vorbeschriebene Ausgestaltung mit einem verzahnten ebenen Bereich und einem gegenüberliegenden verzahnten konvexen Bereich aufweist. Diese (ersten und zweiten) Bereiche können die dem Gelenkbereich näheren Greifbereiche sein.

Die Greifzone, gebildet durch die dritten und vierten gezahnten Bereiche, ist bevorzugt end- bzw. spitzenseitig der Zangenbacken ausgebildet.

In einer möglichen Ausgestaltung enden die Zahnspitzen der dritten und vierten gezahnten Bereiche jeweils in einer die Zahnspitzen berührenden, im Längsquerschnitt ebenen Hüllfläche. Diese Hüllflächen erstrecken sich in einer Zangenmaul-Schließstellung bevorzugt etwa parallel zueinander ausgerichtet. Auch kann hierbei eine Durchdringung der Hüllflächen in der Zangenmaul-Schließstellung gegeben sein, zufolge Ineinandergreifen der Zähne der gegenüberliegenden Bereiche.

Zudem kann die ebene Hüllfläche des dritten oder vierten gezahnten Bereiches in Verlängerung derselben in Längserstreckung der Zangenbacke in die ebene Hüllfläche des ersten verzahnten Bereiches übergehen.

Die ebene Hüllfläche des anderen dritten oder vierten gezahnten Bereiches kann in Verlängerung in Längserstreckung der Zangenbacke tangential übergehen in die konvexe Hüllfläche des zweiten verzahnten Bereiches.

Auch können die Zahnspitzen des dritten gezahnten Bereiches in einer diese berührenden ebenen Hüllfläche enden und die Zahnspitzen des vierten gezahnten Bereiches in einer diese berührenden konvexen Hüllfläche.

Die konvexe Hüllfläche kann hierbei denselben Krümmungsradius wie die des zweiten gezahnten Bereiches aufweisen, alternativ einen demgegenüber größeren oder kleineren Radius.

Es kann nur ein Greifbereich, bestehend aus erstem und zweitem Bereich bzw. drittem und viertem Bereich, mit einer konvexen Hüllfläche im Bereich einer Verzahnung versehen sein. Alternativ können auch beide Greifbereiche mit je einer ebenen und einer konvexen Hüllfläche versehen sein, wobei die Verzahnungen mit gleichen Hüllflächen nicht zwingend an derselben Zangenbacke ausgebildet sein müssen.

Mit Bezug auf eine Symmetrieachse der Zange, welche durch die geometrische Gelenkachse des Gelenkbereiches geht und auf welche Symmetrieachse die Arbeitsbereiche der Zangenschenkel aufeinander zu bewegbar sind, kann die konvexe Hüllfläche des zweiten verzahnten Bereiches in einer Zangenmaul-Schließstellung tangential in die Symmetrieachse einlaufend in Richtung auf das freie Ende der Zangenbacke und/oder in Richtung auf die gegebene Lochstruktur, die die ersten und zweiten gezahnten Bereiche von möglichen dritten und vierten gezahnten Bereichen trennt, gebildet sein.

### Kurze Beschreibung der Zeichnungen

Nachstehend ist die Erfindung anhand der beigefügten Zeichnung erläutert, die aber lediglich Ausführungsbeispielen darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung eine Zange der in Rede stehenden Art, eine erste Ausführungsform betreffend;
- Fig. 2: die Zange in vergrößerter Ansicht, betreffend Arbeitsbereiche der Zange in einer Zangenmaul-Schließstellung;
- Fig. 3: die Herausvergrößerung des Bereiches III in Figur 2;
- Fig. 4: eine der Figur 3 entsprechende Darstellung, bei Ergreifen eines blechförmigen Werkstückes durch die zangenseitigen Arbeitsbereiche;
- Fig. 5: die Herausvergrößerung des Bereiches V in Figur 4;
- Fig. 6: den Schnitt gemäß der Linie VI-VI in Figur 5;
- Fig. 7: eine der Figur 5 entsprechende Darstellung, jedoch die Zangenmaul-Schließstellung betreffend;
- Fig. 8: eine der Figur 2 entsprechende Darstellung, eine Zange in einer zweiten Ausführungsform betreffend;
- Fig. 9: eine der Figur 3 entsprechende Darstellung, betreffend eine dritte Ausführungsform.

### Beschreibung der Ausführungsformen

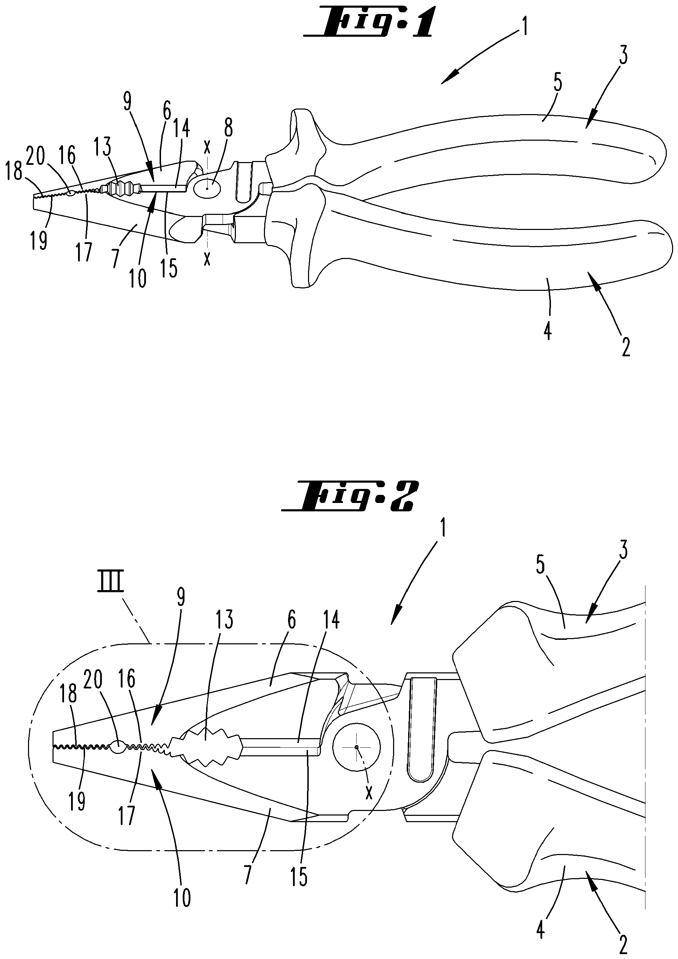

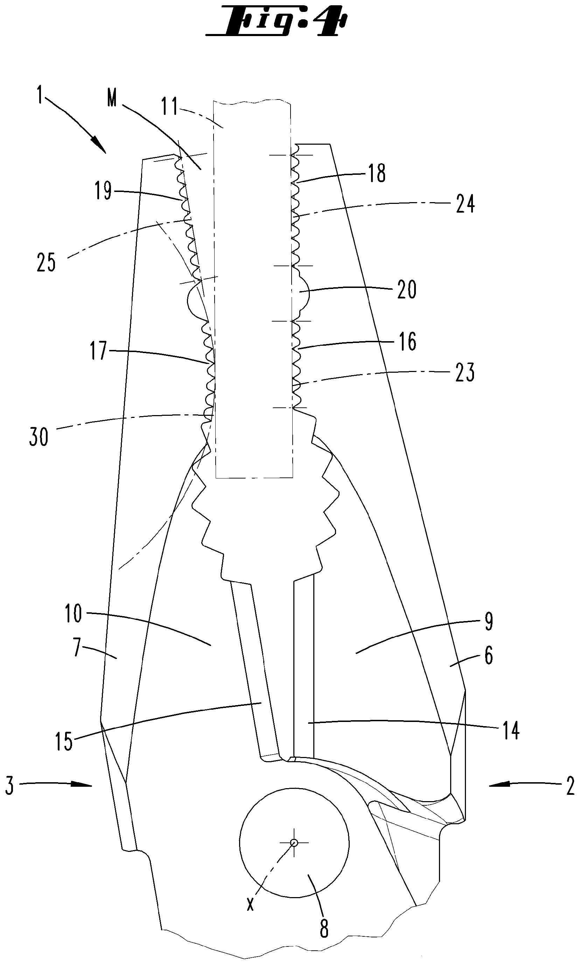

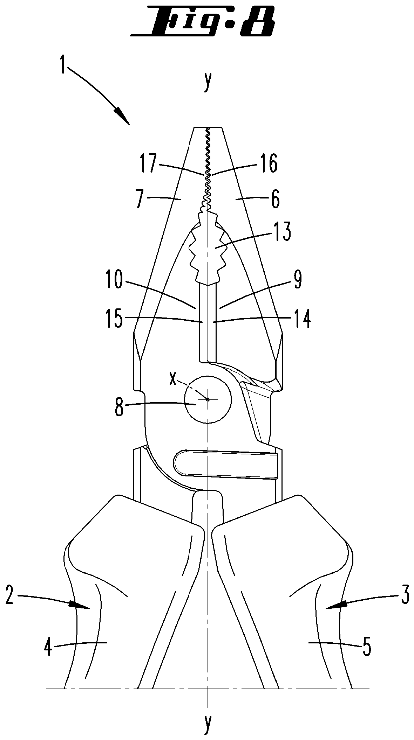

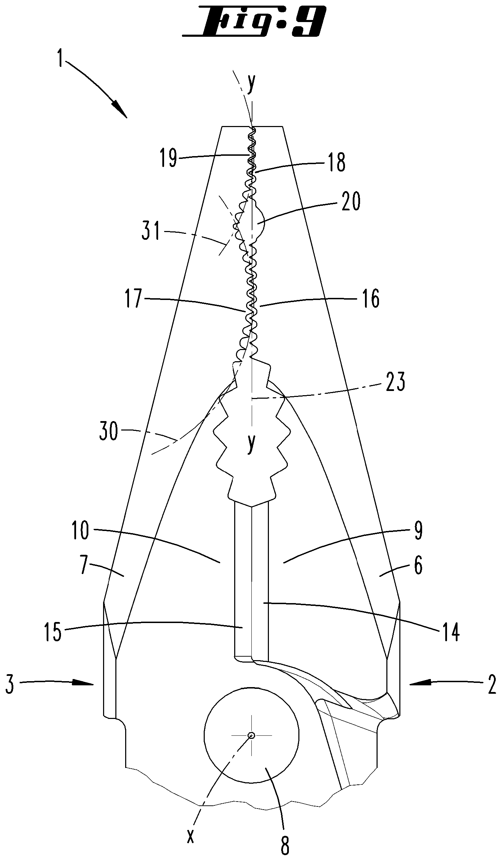

Dargestellt und beschrieben ist, zunächst mit Bezug zu Figur 1, eine Zange 1. Diese ist in dem in den Figuren 1 bis 7 dargestellten ersten Ausführungsbeispiel als Kombinationszange ausgebildet. Die nachfolgenden Ausführungen beziehen sich nicht nur auf eine solche Kombinationszange, sondern auch auf weitere Zangen, mit denen ein Werkstück 11, insbesondere ein platten- oder blechartiges Werkstück, gegriffen werden kann. Beispiele zeigen die Figuren 8 und 9, betreffend weitere Ausführungsformen einer Kombinationszange.

Die Zange 1 weist zwei kreuzend zueinander angeordnete Zangenschenkel 2, 3 auf. Hierbei formt jeder Zangenschenkel 2, 3 einen Griffschenkel 4, 5, welcher jenseits des Kreuzungs- und Gelenkbereiches der Zangenschenkel 2, 3 in eine Zangenbacke 6, 7 übergeht.

Der Griffschenkel 4 und die Zangenbacke 6 bilden den Zangenschenkel 2; Griffschenkel 5 und Zangenbacke 7 den Zangenschenkel 3.

Das feststehende Gelenk ist durch einen Gelenkbolzen 8 gegeben. Dieser durchsetzt die Zangenschenkel 2, 3 im Übergangsbereich vom jeweiligen Griffschenkel in die Zangenbacke.

Die Körperachse des Gelenkbolzens 8 zugleich bildende geometrische Gelenkachse x erstreckt sich senkrecht zu einer Ebene, in welcher sich die Zangenschenkel 2, 3 bei Betätigung der Zange 1 bewegen.

Die Zange 1 ist weitestgehend symmetrisch ausgebildet, bezogen auf eine durch die Gelenkachse x verlaufende Symmetrieachse y, auf welche Arbeitsbereiche 9, 10 der Zangenschenkel 2, 3 aufeinander zu bewegbar sind. Bei der Zange 1 der Ausführungsform gemäß der Darstellung in der Figur 9 bezieht sich die Symmetrie allein auf den Zangenbackenbereich.

Die Arbeitsbereiche 9 und 10 der Zange 1 gemäß den Ausführungsformen in den Figuren 1 bis 8 sind im Wesentlichen unterteilt in einen dem freien Ende der Zangenbacken 6, 7 zugeordneten Flachzangenabschnitt und einen dem gelenkbolzenseitigen Bereich zugeordneten Seitenschneiderabschnitt. Flachzangenabschnitt und Seitenschneiderabschnitt sind getrennt durch eine bei geschlossenem Zangenmaul M gegebene, lochartige Greifstruktur 13. Diese wird auch als Brennerloch bezeichnet, insbesondere zum Erfassen von Werkstücken mit einem Durchmesser ab etwa 5 mm.

Zwischen dieser Greifstruktur 13 und den dem Gelenkbolzen 8 zugewandten Enden sind die Arbeitsbereiche 9 und 10 als Schneiden 14 und 15 gebildet, zur Ausformung des Seitenschneiderabschnittes.

In Richtung auf die freien Enden der Zangenbacken 6 und 7 bei dem ersten Ausführungsbeispiel (Figuren 1 bis 7) sind ausgehend von der Greifstruktur 13 im Bereich der Zangenbacke 6 erste und dritte verzahnte Bereiche 16 und 18 ausgebildet und an der gegenüberliegenden Zangenbacke 7 zweite und vierte verzahnte Bereiche 17 und 19.

Die ersten und zweiten verzahnten Bereiche 16 und 17 sind zu den in Richtung der freien Enden der Zangenbacken 6 und 7 vorgelagerten verzahnten Bereiche 18 und 19 durch eine sich bei geschlossenem Zangenmaul M einstellende Lochstruktur 20 getrennt.

In dem Ausführungsbeispiel gemäß der Darstellung in Figur 8 ist der Flachzangenabschnitt allein gegeben durch die Bereiche 16 und 17. Weitere Bereiche 18 und 19 sowie eine Lochstruktur 20 sind nicht gegeben.

Ähnlich der Ausführungsform gemäß Figur 8 sind auch die Arbeitsbereiche 9 und 10 bei der Zange 1 in der in Figur 9 dargestellten Ausführungsform ausgebildet, wenngleich ausgehend von der Greifstruktur 13 in Richtung auf den Gelenkbolzen 8 der jeweilige Arbeitsbereich einen weiteren verzahnten Bereich 26, 27 bildet.

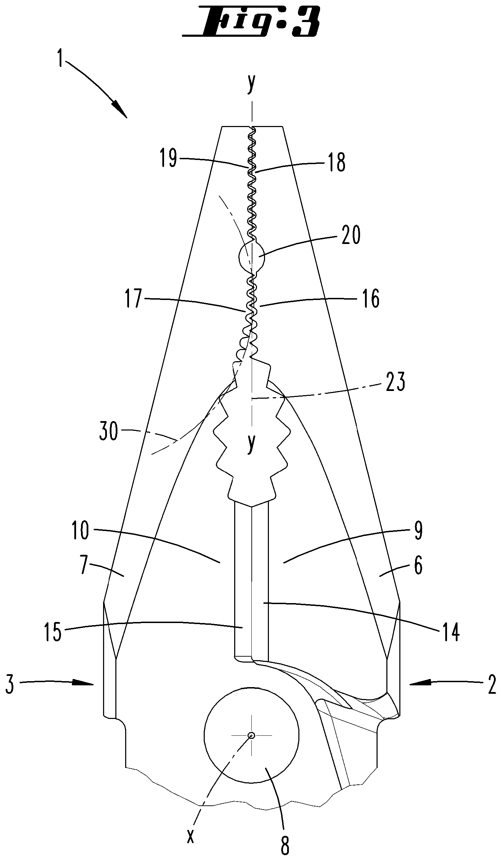

Die verzahnten Bereiche weisen einzelne gleichgerichtete Zähne 21 auf. Deren Zahnspitzen 22 erstrecken sich linienartig quer zur Längserstreckung der Zangenbacken 6, 7. Die Zahnspitzen 22 sind in Längserstreckung der Zangenbacken 6, 7 betrachtet gleichmäßig zueinander beabstandet. Gegenüberliegende Zahnbereiche sind so ausgebildet und ausgerichtet, dass in einer Zangenmaul-Schließstellung bspw. gemäß der Darstellung in Figur 3 die Zähne 21 ineinandergreifen können und so entsprechend über die Symmetrieachse y hinaus sich erstrecken können.

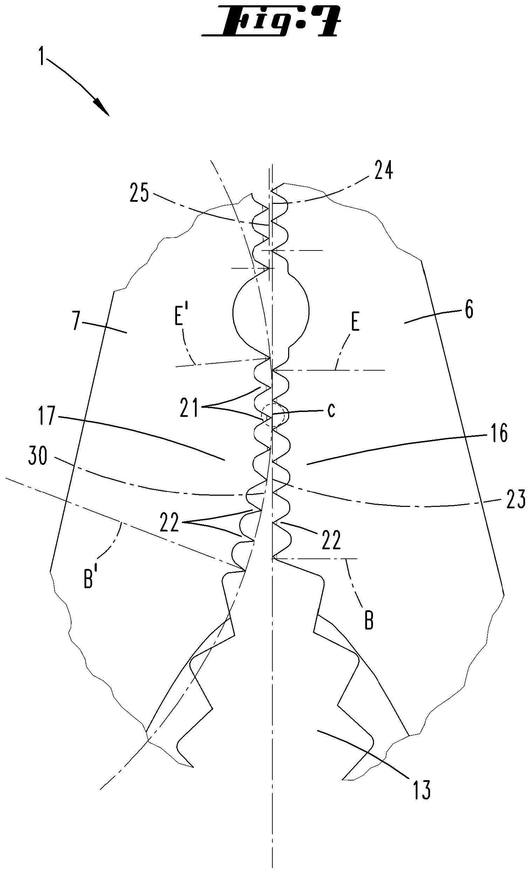

Die Zahnspitzen 22 insbesondere im verzahnten Bereich 16 berühren in einer Abfolge in Längserstreckung der diesbezüglichen Zangenbacke 6 betrachtet eine im Längsquerschnitt bzw. in einer Längsansicht gemäß Figur 3 ebene Hüllfläche 23. Diese ebene Hüllfläche 23 ist in der Zangenmaul-Schließstellung gemäß der Figur 3 bzw. im Zuge der Schließung des Zangenmaules unmittelbar vor Erreichen der Zangenmaul-Schließstellung gemäß Figur 7 in eine Parallelausrichtung zur Symmetrieachse y verbracht.

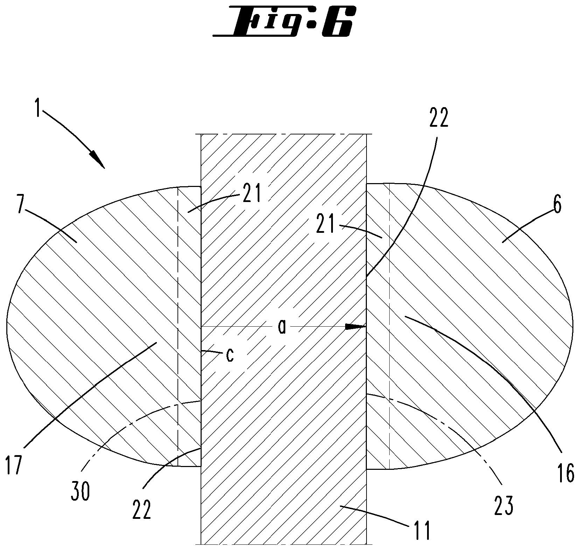

Wie aus der Darstellung in Figur 6 zu erkennen, erstreckt sich die alle Zahnspitzen des einen Bereiches 16 berührende Hüllfläche 23 auch quergerichtet zur Längserstreckung der Zangenbacke 6 in einer ebenen Fläche.

Ein gemäß den Darstellungen in den Figuren 1 bis 7 vorgesehener weiterer (vorgelagerter) verzahnter Bereich 18 der Zangenbacke 6 berührt mit seinen Zahnspitzen 22 eine ebenfalls ebene Hüllfläche 24, die sich, wie auch bevorzugt, in derselben Ebene erstrecken kann, wie die Hüllfläche 23 des verzahnten Bereiches 16.

In bevorzugter Ausgestaltung ist ein dem verzahnten Bereich 18 gegenüberliegender verzahnter Bereich 19 der anderen Zangenbacke 7 hinsichtlich der Ausrichtung der Zähne 21 und der sich hierbei ergebenden Hüllfläche 25 gleich gestaltet, so dass die Hüllfläche 25 eine Ebene aufspannt, die in der Zangenmaul-Schließstellung zumindest annähernd parallel ausgerichtet ist zur korrespondierenden Hüllfläche 24 des verzahnten Bereiches 18.

Die weiteren, dem Gelenkbolzen 8 zugewandten verzahnten Bereiche 26 und 27 bei dem in Figur 9 dargestellten Ausführungsbeispiel können ebenso solche ebenen Hüllflächen 28 und 29 aufweisen. Diese sind in der dargestellten Zangenmaul-Schließstellung bevorzugt parallel ausgerichtet zur Symmetrieachse y.

Abweichend zu der Anordnung der Zähne 21 und der damit einhergehenden ebenen Hüllflächengestaltung des verzahnten Bereiches 16 und darüber hinaus gegebenenfalls der verzahnten Bereiche 18 und 19 und/oder 26 und 27 ist der dem verzahnten Bereich 16 gegenüberliegende verzahnte Bereiche 17 im Bereich der Zangenbacke 7 so ausgebildet, dass die Zahnspitzen 22 dieser Zähne 21 mit Bezug auf einen Längsquerschnitt bzw. eine Ansicht gemäß den Darstellungen in den Figuren 2, 8 oder 9 in einer konvexen Hüllfläche 30 enden. Quer hierzu betrachtet erstreckt sich die Hüllfläche 30 im Querschnitt gemäß Figur 6 eben, bevorzugt parallel ausgerichtet zu der Querschnittsausrichtung der gegenüberliegenden Hüllfläche 23.

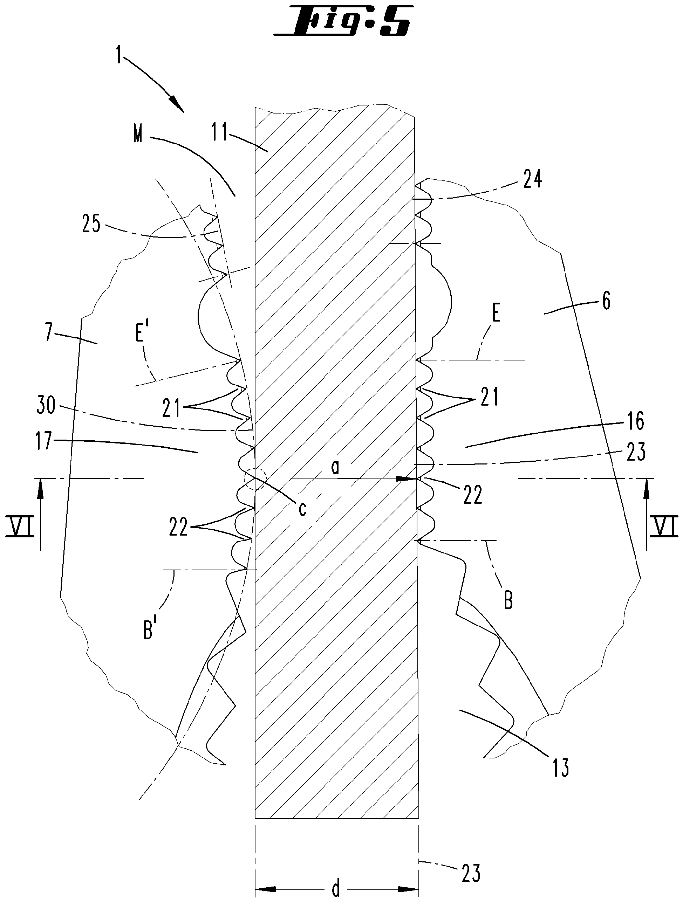

Wie insbesondere aus der vergrößerten Darstellung in Figur 5 zu erkennen, erstreckt sich die Hüllfläche 30 in der Längsdarstellung entlang eines Kreisbogenabschnittes.

Betrachtet ausgehend vom Gelenkbolzen 8 hin zum freien Ende der Zangenbacken 6 und 7 weist jeder gezahnte Bereich 16 und 17 einen sich auf die Hüllfläche 23 bzw. 30 beziehenden Beginn B, B' und ein Ende E, E' auf.

Die Anordnung der Zähne 21 im gezahnten Bereich 17 ist bevorzugt so gewählt, dass bei geschlossenem Zangenmaul M die Kreisabschnittlinie der Hüllfläche 30 im Bereich des Endes E' zumindest annähernd tangential in die Hüllfläche 23 des ersten verzahnten Bereiches 16 einläuft.

Bei einem zwischen den Zangenbacken 6 und 7 eingespannten flächigen Werkstück 11 ergibt sich zugewandt dem ersten verzahnten Bereich 16 eine flächige Abstützung auf bevorzugt allen Zahnspitzen 22 dieses Bereiches 16. Diesen gegenüberliegend ist eine quer zur Längserstreckung der Zangenbacke betrachtete linienartige Abstützung der Zangenbacke 7 im konvex gekrümmten Bereich 17 gegeben. Es ergibt sich weiter im Bereich der sich auf der zugewandten Oberfläche des Werkstückes 11 abstützenden Zahnspitze 22 eine Berührungslinie c, quergerichtet zur Backenlängserstreckung.

Es ergibt sich bei Werkstücken 11 mit einer für diese Zange 1 maximal zulässigen Dicke d eine Ausrichtung der Berührungslinie c gegenüberliegend zu dem Bereich 16 bzw. der hier gegebenen Hüllfläche 23.

Eine über die Zangenbacke 7 und den auf die zugewandte Oberfläche des Werkstückes 11 einwirkenden Zahn 21 im Bereich der Berührungslinie c in das Werkstück 11 eingeleitete Kraft wirkt über das Werkstück 11 in den Bereich 16 zwischen dessen Beginn B und dessen Ende E, weiter bevorzugt im Bereich der ersten Hälfte des Bereiches 16 von dessen Beginn B an ausgehend betrachtet (vgl. Figur 5, Pfeil a).

Bei einer Projektion der Berührungslinie c entlang dem Pfeil a in Richtung auf den ersten verzahnten Bereich 16 befindet sich die Berührungslinie c bei einem eingespannten Werkstück 11 bis zu dem maximal für diese Zange 1 vorgesehenen Dickenmaß des Werkstückes 11 im Bereich der ersten Hälfte der Erstreckung des Bereiches 16, d.h. im Bereich zwischen dem Beginn B und der zwischen dem Beginn B und dem Ende E gegebenen Mitte.

Ohne ein eingespanntes Werkstück und bei unmittelbarer Berührung der Hüllflächen 23 und 30 gemäß der Darstellung in Figur 7 ergibt sich ein am weitesten vorgewölbter Punkt der Hüllfläche 30, der mittig oder in der dem Ende E' zugewandten Hälfte der Längserstreckung des zweiten verzahnten Bereiches 17 zwischen dessen Beginn B' und dessen Ende E' liegt.

Wie aus der Darstellung in Figur 9 ersichtlich, kann auch einer der beiden spitzenseitig der Zangenbacken 6, 7 möglichen verzahnten Bereiche 18, 19 eine konvexe Hüllfläche 31 aufweisen, in welcher die betreffenden Zahnspitzen 22 enden. So kann der vierte verzahnte Bereich 19 wie vorbeschrieben gestaltet sein, während die Zahnspitzen 22 des gegenüberliegenden verzahnten Bereiches 18 in einer ebenen Hüllfläche 24 enden.

Auch kann die konvexe Hüllfläche 31 in der Zangenschließstellung zumindest annähernd tangential in die ebene Hüllfläche 24 einlaufen.

Beide konvexe Hüllflächen 30 und 31 können, wie dargestellt, an derselben Zangenbacke 6 oder 7 gebildet sein. Alternativ kann eine Hüllfläche 30 an der einen Zangenbacke und die andere an der anderen Zangenbacke gebildet sein.

### Liste der Bezugszeichen

| | | | |
|---|---|---|---|
| 1 | Zange | 28 | Hüllfläche |
| 2 | Zangenschenkel | 29 | Hüllfläche |
| 3 | Zangenschenkel | 30 | Hüllfläche |
| 4 | Griffschenkel | 31 | Hüllfläche |
| 5 | Griffschenkel | | |
| 6 | Zangenbacke | | |
| 7 | Zangenbacke | | |
| 8 | Gelenkbolzen | | |
| 9 | Arbeitsbereich | | |
| 10 | Arbeitsbereich | | |
| 11 | Werkstück | | |
| 12 | Längsschlitz | a | Pfeil |
| 13 | Greifstruktur | c | Berührungslinie |
| 14 | Schneide | d | Dicke |
| 15 | Schneide | x | Gelenkachse |
| 16 | erster verzahnter Bereich | y | Symmetrieachse |
| 17 | zweiter verzahnter Bereich | | |
| 18 | dritter verzahnter Bereich | | |
| 19 | vierter verzahnter Bereich | | |
| 20 | Lochstruktur | B | Beginn |
| 21 | Zahn | B' | Beginn |
| 22 | Zahnspitze | E | Ende |
| 23 | Hüllfläche | E' | Ende |
| 24 | Hüllfläche | M | Zangenmaul |
| 25 | Hüllfläche | | |
| 26 | verzahnter Bereich | | |
| 27 | verzahnter Bereich | | |

## Patentansprüche

1. Zange (1) mit zwei Zangenschenkeln (2, 3), die in einem einen feststehenden Gelenkbolzen (8) aufweisenden Gelenkbereich kreuzend zueinander geführt sind, wobei auf einer Seite des Gelenkbereiches an den Zangenschenkeln (2, 3) Griffbereiche ausgebildet sind und an der anderen Seite an freien Enden der Zangenschenkel (2, 3) Arbeitsbereiche (9, 10), die sich zu einem Zangenmaul (M) ergänzen, wobei weiter die Arbeitsbereiche (9, 10) bei geschlossenem Zangenmaul (M) zur Anlage kommende erste und zweite verzahnte Bereiche (16, 17) aufweisen und die gegenüberliegenden ersten und zweiten verzahnten Bereiche (16, 17) in ihrer Längserstreckung unterschiedlich geformt sind, wobei darüber hinaus bei dem ersten gezahnten Bereich (16) die Zahnspitzen (22) in einer Abfolge in Längserstreckung des Zangenschenkels (2, 3) betrachtet in einer diese berührenden, im Längsquerschnitt ebenen Hüllfläche (23) enden und die Zahnspitzen (22) des gegenüberliegenden zweiten gezahnten Bereiches (17) in einer diese berührenden, im Längsquerschnitt konvexen Hüllfläche (30) enden, **dadurch gekennzeichnet, dass** der bezogen auf eine Längserstreckung der Zangenbacken (6, 7) in einem Längsquerschnitt sich bei Berührung der Hüllflächen (23, 30) des ersten und des zweiten gezahnten Bereiches (16, 17) am Weitesten in Richtung auf den gegenüberliegenden Arbeitsbereich (9) vorwölbende Punkt der konvexen Hüllfläche (30) etwa mittig des zweiten gezahnten Bereiches (17) angeordnet ist oder dass in Richtung der freien Enden der Zangenschenkel (2, 3) vorgelagert der ersten und zweiten gezahnten Bereiche (16, 17) dritte und vierte gezahnte Bereiche (18, 19) ausgebildet sind, die von den ersten und zweiten gezahnten Bereichen (16, 17) durch eine sich bei geschlossenem Zangenmaul (M) gegebene Lochstruktur (20) getrennt sind und der dritte oder vierte gezahnte Bereich (18, 19) der Zangenbacke (6) mit seinen Zahnspitzen (22) eine ebenfalls ebene Hüllfläche (24) berührt und dass der sich am weitesten vorwölbende Punkt in einer einem Ende (E') zugewandten Hälfte der Längserstreckung des zweiten gezahnten Bereiches (17) angeordnet ist.

2. Zange nach Anspruch 1, **dadurch gekennzeichnet, dass** die Zahnspitzen (22) der dritten und vierten gezahnten Bereiche (18, 19) jeweils in einer die Zahnspitzen (22) berührenden, im Längsquerschnitt ebenen Hüllfläche (24, 25) enden.

3. Zange nach einem der vorhergehenden Ansprüche, **dadurch gekennzeichnet, dass** die Zahnspitzen (22) des dritten gezahnten Bereiches (18) in einer diese berührenden ebenen Hüllfläche (24) enden und die Zahnspitzen (22) des vierten gezahnten Bereiches (19) in einer diese berührenden konvexen Hüllfläche (31).

## Claims

1. Pliers (1) having two pliers handles (2, 3) guided such that they cross one another in a joint region having a stationary joint bolt (8), wherein gripping regions are formed on the pliers handles (2, 3) on one side of the joint region, and working regions (9, 10) are formed on free ends of the pliers handles (2, 3) on the other side, said working regions complement each other to form a pliers jaw (M), wherein the working regions (9, 10) further have first and second toothed regions (16 and 17) that come into contact when the pliers jaw (M) is closed, and the opposing first and second toothed regions (16, 17) are shaped differently in the longitudinal extension thereof, wherein in the first toothed region (16), viewed in a sequence in the longitudinal extent of the pliers handle (2, 3), the tooth tips (22) end in a surrounding surface (23) that is flat in the longitudinal cross-section and in contact with same, and that the tooth tips (22) of the opposing second toothed region (17) end in a surrounding surface (30) that is convex in the longitudinal cross-section and in contact with same **characterized in that** with regard to a longitudinal extent of the pliers jaw member (6, 7), the point of the convex surrounding surface (30) which protrudes furthest towards the opposite working region (9) when the surrounding surfaces (23, 30) of the first and the second toothed regions (16, 17) come into contact with one another in a longitudinal cross-section is arranged approximately in the middle of the second toothed region (17)or that in the direction of the free ends of the pliers handles (2, 3) upstream of the first and second toothed regions (16, 17), third and fourth toothed regions (18, 19) are formed which are separated from the first and second toothed regions (16, 17) by a hole structure (20) that is given when the pliers jaw (M) is closed and the third and fourth toothed regions (18, 19)of the pliers jaw member (6) gets in contact to a flat surrounding surface (24) with its tooth tips (22) and that the most convex point is placed facing an end (E') of a half of the longitudinal of the second toothed section (17) .

2. Pliers according to claim 1, **characterized in that** the tooth tips (22) of the third and fourth toothed regions (18, 19) each end in a surrounding surface (24, 25) that contacts the tooth tips (22) and is flat in longitudinal cross-section.

3. Pliers according to one of the preceding claims, **characterized in that** the tooth tips (22) of the third toothed region (18) end in a flat surrounding surface (24) contacting them and the tooth tips (22) of the fourth toothed region (19) end in a convex surrounding surface (31) contacting them.

## Revendications

1. Pince (1) avec deux branches de pince (2, 3) qui sont guidées l'une par rapport à l'autre en se croisant dans une région d'articulation présentant un axe d'articulation fixe (8), dans laquelle sont formées des régions de poignée sur les branches de pince (2, 3) d'un côté de la région d'articulation et de l'autre côté, aux extrémités libres des branches de pince (2, 3), des régions de travail (9, 10) qui se complètent pour former une gueule de pince (M), dans lequel en outre les régions de travail (9, 10) comprennent des première et deuxième régions dentées (16) qui viennent en appui lorsque la gueule de pince (M) est fermée, 17) et les première et deuxième régions dentées opposées (16, 17) sont formées différemment dans leur extension longitudinale, dans laquelle, de surcroit, en les observant suivant l'extension longitudinale de la branche de pince (2, 3), les crêtes de dents (22) de la première région dentée (16) se terminent en succession dans une surface d'enveloppe (23) qui est plane en section longitudinale et qui les touche et les crêtes de dents (22) de la deuxième région dentée opposée (17) se terminent dans une surface d'enveloppe (30) qui est convexe en section longitudinale et qui les touche, **caractérisée en ce que** par rapport à une extension longitudinale des mâchoires de pince (6, 7), le point de la surface d'enveloppe convexe (30) qui, dans une section longitudinale, fait saillie le plus loin en direction de la région de travail opposée (9) lorsque les surfaces d'enveloppe (23, 30) de la première et de la deuxième région dentée (16, 17) se touchent, est agencé à peu près au milieu de la deuxième région dentée (17), ou **en ce que** sont formées en amont des première et deuxième régions dentées (16, 17) en direction des extrémités libres des branches de pince (2, 3), des troisième et quatrième régions dentées (18, 19) qui sont séparées des première et deuxième régions dentées (16, 17) par une structure de trou(s) (20) qui existe lorsque la gueule de pince (M) est fermée et la troisième ou quatrième région dentée (18), 19) de la mâchoire de pince (6) touche avec ses crêtes de dents (22) une surface d'enveloppe (24) qui est également plane et **en ce que** le point le plus saillant est agencé dans la moitié de l'extension longitudinale de la deuxième région dentée (17) qui est tournée vers une extrémité (E').

2. Pince selon la revendication 1, **caractérisée en ce que** les crêtes de dents (22) des troisième et quatrième régions dentées (18, 19) se terminent respectivement dans une surface d'enveloppe (24, 25) qui est plane en section longitudinale et qui touche les crêtes de dents (22).

3. Pince selon l'une des revendications précédentes, **caractérisée en ce que** les crêtes de dents (22) de la troisième région dentée (18) se terminent dans une surface d'enveloppe plane (24) qui les touche et les crêtes de dents (22) de la quatrième région dentée (19) se terminent dans une surface d'enveloppe convexe (31) qui les touche.
